Europäisches Patentamt

European Patent Office

Office européen des brevets

(19)

(11) Publication number: **0 022 312**
A1

(12) # EUROPEAN PATENT APPLICATION

(21) Application number: **80301876.1**

(22) Date of filing: **05.06.80**

(51) Int. Cl.³: **B 60 P 1/26**

(30) Priority: **06.07.79 GB 7923631**

(43) Date of publication of application:
**14.01.81 Bulletin 81/2**

(84) Designated Contracting States:
**DE FR IT NL SE**

(71) Applicant: **Coal Industry (Patents) Limited**
**Hobart House Grosvenor Place**
**London SW1X 7AE(GB)**

(72) Inventor: **Clarke, John Alfred**
**2 Stuart Close**
**Walton Stone, Staffordshire(GB)**

(74) Representative: **Wood, John Irwin**
**Hobart House Grosvenor Place**
**London SW1X 7AE(GB)**

(54) **Closure arrangement for a vehicle body.**

(57) A vehicle tipper discharge door (10) is held closed by a mechanism (12) which includes a retaining member (14) in the form of a bell-crank lever which is actuated to release the door (10) upon elevation of the vehicle body (1). Closure and locking of the door (10) upon descent of the body (1) is effected automatically by interaction between a stop (30) and a further bell-crank lever (26).

EP 0 022 312 A1

./...

Croydon Printing Company Ltd.

FIG. I.

## Closure Arrangement for a Vehicle Body

This invention relates to a closure arrangement for a vehicle body.

In particular, but not exclusively, the invention has reference to such an arrangement for a vehicle tipper body having a discharge zone at the rear thereof. One type of tipper body is used for waste or dirt disposal and w..h conventional vehicles difficulties can sometimes be encountered during the tipping operation. For example, with some forms of waste material it is necessary to provide a $30^{o}$ scow end in order to retain the material satisfactorily within the body. Waste material may also tend to remain in the body for a substantial time during the tipping operation and then is suddenly released causing damage to the elevating equipment, that is the rams and their component parts which are subjected to excessive shock loading and wear.

Vehicle tipper bodies are known which are provided with rear discharge doors, hinged horizontally along their top edges and having bolts or other manually operated locking arrangements to retain the doors in the closed position during transport. When it becomes necessary to effect discharge of the contents of the body, the bolts are released such that upon elevation of the body, the contents can slide down through the open door. With this type of construction, the doors have to be relocked manually and if sufficient diligence is not shown by the operatives, this can be forgotten. In other types of vehicle tipper bodies, hydraulically operated locking arrangements are provided and whilst these afford a more positive action than the manual arrangements, they necessitate expensive auxiliary equipment which requires maintenance.

An object of the invention is therefore to provide an improved closure arrangement for a vehicle body such that difficulties hitherto experienced with conventional vehicle bodies can be substantially overcome.

Accordingly the invention provides a closure arrangement for a vehicle body which has a discharge zone, the arrangement including a hinged door for closing off the discharge zone and a mechanism for retaining the door in a closed position, the mechanism being operable to release the door from said closed position upon and by elevation of the vehicle body.

The mechanism is also operable to captivate the door and to lock the door in its closed position upon descent of the vehicle body.

The door is conveniently hinged along its top-edge and abuts a marginal edge of the base of the vehicle body at a region remote from the location of the hinge.

The mechanism includes at least one pivotally mounted retaining member in the form of a bell-crank lever one side of which incorporates a bearing portion for bearing on the door to captivate and retain the same, the other side of the level being pivotally attached to an actuating element.

The actuating element may conveniently be in for form of a rod which is pivotally connected at its other end remote from the bearing portion of the retaining member to one arm of a bell-crank lever, the other arm being adapted to abut a stop.

The mechanism is operable to release the door by virtue of a bias which may be in the form of a spring. Alternatively the other arm of the bell-crank lever which abuts the stop may be weighted to provide the bias. Upon abutment of this other arm with the stop upon descent of the vehicle body, the mechanism moves to captivate and finally to retain the door in its closed position.

The advantages of the invention reside in its mechanical format and the simplicity attaching thereto. The invention affords a positive closure arrangement for a vehicle tipper body such that release and locking are automatically effected upon elevation and descent of the body respectively. There are few moving parts and only simple linkages constitute the invention necessitating little, if any, maintenance.

By way of example only, one form of closure arrangement for a vehicle body according to the invention is described below with reference to the accompanying drawings in which:-

Figure 1 is a side view of a vehicle body and the closure arrangement in a closed position;

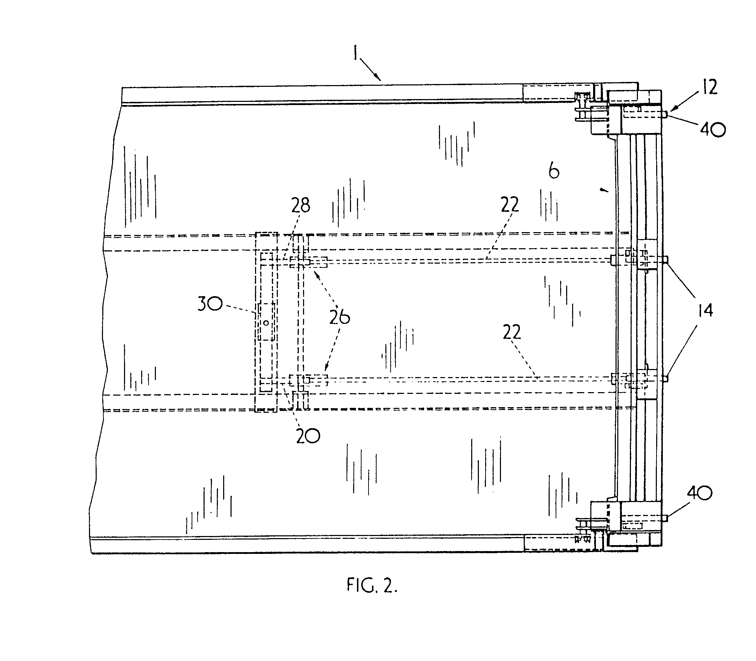

Figure 2 is a plan view;

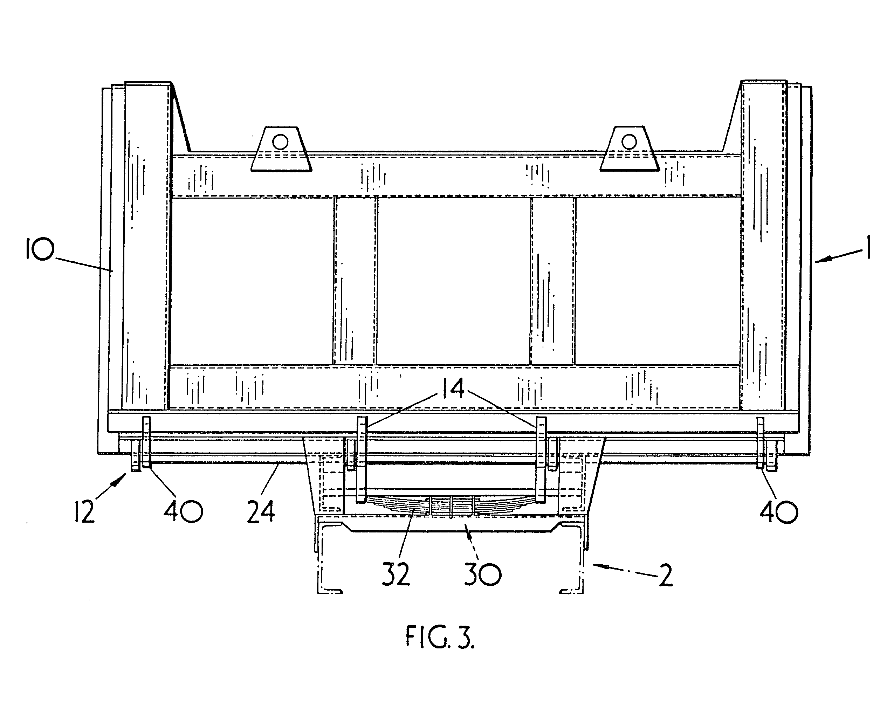

Figure 3 is an end view on the arrow A of Figure 1; and

Figure 4 is a further side view equivalent to Figure 1 and showing the closure arrangement in an open position.

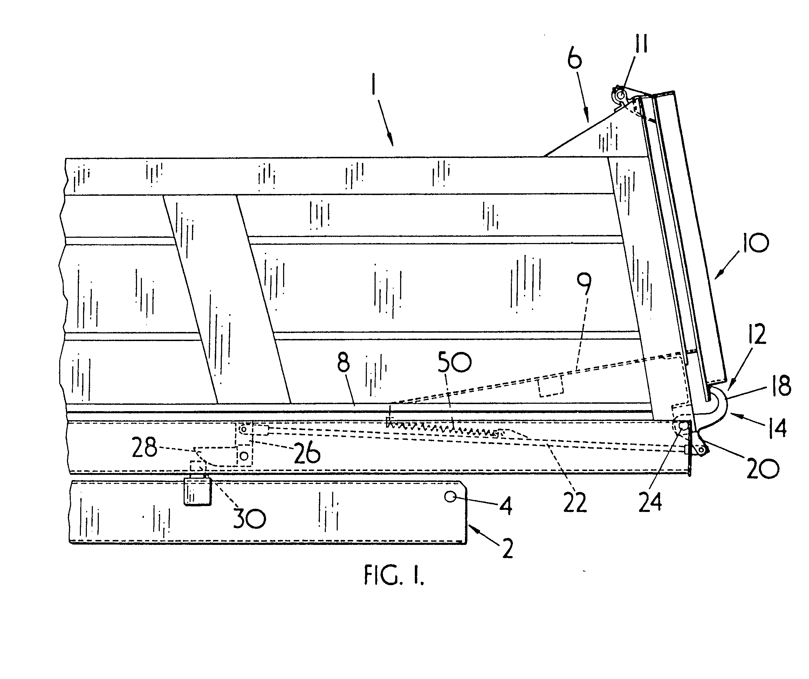

Referring to the drawings, a vehicle body 1 is shown and is pivotally attached (not shown) to the chassis 2 of a tipper (not shown), the body 1 being pivotal about a point 4 by means of a fluid operable ram or other suitable means (not shown). The body 1 has a discharge zone 6 and the base 8 of the body 1 in this vicinity has a shallow scow end 9 of approximately $10^{o}$. A door 10 is hinged along its top edge at 11 to the body 1 adjacent the discharge zone 6 and is shown in Figure 1 closing this zone. In the closed position the door 10 abuts the edge of the base 8 to provide a seal and is retained in this position by a mechanism 12.

The mechanism 12 includes two retaining members 14 each of which is in the form of a bell-crank lever one arm of which has a bearing portion 18 adapted to contact and bear on the door 10. The other arm 20 of each member 14 is attached to a rod 22 for pivotally actuating the member 14 which is fixed upon a rotatable shaft 24. The other end of the rod 22 is fixed to one arm of a bell-crank lever 26. The other arm 28 of each lever 26 is adapted to abut a stop 30 in the form of a leaf spring arrangement 32 disposed laterally of the chassis 2, the levers 26 abutting the arrangement 32 at its ends.

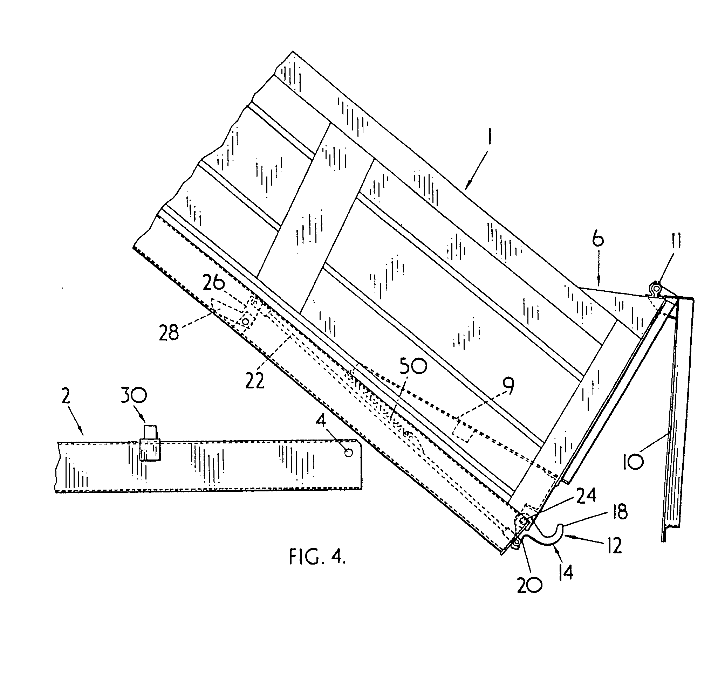

In Figure 1 the door 10 is in a closed position and is held in that position by the bearing portions 18 of the retaining members 14 and by clamps 40 also mounted on shaft 24. The clamping force of these portions 18 and clamps 40 on the door 10 is maintained through the agency of the rods 22 and the levers 26, the other arms 28 of which abut the ends of the leaf spring arrangement 32. When it is desired to elevate the vehicle body 1 to tip its contents, a ram or rams (not shown) is/are actuated to pivot the body 1 about point 4. This has the simultaneous effect of releasing the arms 28 from their abutting position on the leaf spring arrangement 32 of the stop 30, whereupon the levers 26 can pivot anti-clockwise as seen in Figures 1 and 4 either under the weight of arms 28 or under the action of a closed coil spring 50 acting between the body 1 and each rod 22. This causes the rods 22 to move to the left as seen in the drawings of Figures 1 and 4 thereby rotating the shaft 24 clockwise.

The retaining members 14 also move clockwise to release their clamping action in the door 10. The release takes place gradually until the arms 28 are clear of the stop 30 as shown in Figure 4 when the door 10 is able to swing open an amount depending on the angle of elevation of the body 1. With the shallow scow end 9 any material can be released and will flow easily through the discharge zone 6.

When sufficient material has been discharged in this way and it is desired to reposition the body 1, the ram is again actuated to effect the pivotal descent of the body 1. The door 10 swings towards its closed position gradually as the body 1 descends. When the arms 28 of levers 26 abut the stop 30, the levers 26 pivot clockwise and the shaft 24 and therefore retaining members 14 pivot anti-clockwise. This pivotal movement captivates the door 10 before it completely shuts off the discharge zone 6 and as the body 1 descends further, further pivotal movement of the members 14 takes place gradually applying clamping force to the door 10 until the body 1 is completely lowered and the body 1 reassumes the position shown in Figure 1. The door 10 is thus automatically clamped shut just as it is automatically allowed to open. This obviates the necessity of a vehicle driver having to open the door manually and in fact once he has appropriately positioned his vehicle, he need not depart from the driving cab.

The opening and closing of the door is effected positively, smoothly and efficiently particularly by the use of the leaf spring arrangement 32 as the stop 30.

The present invention therefore provides an improved closure arrangement for a vehicle body particularly those employed on dumper trucks and the like.

CASE 4110

Claims:

1. A closure arrangement for a vehicle body (1) which has a discharge zone (6), includes a hinged door (10) for closing off the discharge zone (6), and a mechanism (12) for retaining the door (10) in a closed position, characterised in that the mechanism (12) is operable to release the door (10) from said closed position upon and by elevation of the vehicle body (1).

2. An arrangement according to claim 1 characterised in that the mechanism (12) is operable to captivate and to lock the door (10) in its closed position upon and by descent of the vehicle body (1).

3. An arrangement according to claim 1 or 2 characterised in that the door (10) is hinged (11) along its top edge to the vehicle body (1) and is adapted to abut a marginal edge of the vehicle body (1) at a region remote from the location of the hinge (11).

4. An arrangement according to any one of the preceding claims characterised in that the mechanism (12) includes at least one pivotally mounted retaining member (14)..

5. An arrangement according to claim 4 characterised in that the or each retaining member (14) is in the fan of a bell-crank lever one arm of which incorporates a bearing portion (18) for bearing on the door (10) to captivate and to retain the door (10), the other arm (20) of the lever being pivotally attached to one end of an actuating element (22).

6. An arrangement according to claim 5 characterised in that the actuating element (22) is pivotally connected at the other end thereof

- 7 -

to one arm of a further bell-crank lever (26).

7.   An arrangement according to claim 6 characterised in that the other arm (28) of the further bell-crank lever is adapted to abut a stop (30).

8.   An arrangement according to any one of claims 5, 6 or 7 characterised in that the actuating element (22) is biased such that the bearing portion (18) of the or each retaining member (14) can move into a door releasing mode.

9.   An arrangement according to claim 7 characterised in that the stop (30) incorporates a leaf spring assembly (32) disposed laterally of the vehicle body (1).

10.  A vehicle body includes a closure arrangement as claimed in any one of the preceding claims.

11.  A vehicle includes a vehicle body (1) as claimed in claim 10.

0022312

-1+4

FIG. I.

0022312

-2+4

FIG. 2.

FIG. 3.

0022312

FIG. 4.

0022312

0022312

European Patent Office

**EUROPEAN SEARCH REPORT**

Application number
EP 80 30 1876

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | GB - A - 791 235 (PILOT WORKS)<br>* Claims 1-3; figures * | 1-8 | B 60 P 1/26 |
| X | US - A - 2 552 442 (A. CLISH)<br>* Claim 1; figure 1 * | 2-5,7-9 | |
| A | US - A - 3 383 137 (SMITH)<br>* Claim 1; figures 1,2 * | 1-8 | |
| X | GB - A - 924 826 (LEINWEBER)<br>* Claim 1; figure 1 * | 1-8 | TECHNICAL FIELDS SEARCHED (Int. Cl.³)<br><br>B 60 P |
| X | US - A - 3 379 475 (HOLLAND)<br>* Claim 1; figure 4 * | 1-8 | |
| X | FR - A - 1 201 718 (BERTHE)<br>* Abstract; figures 1-3 * | 1-7 | |
| X | US - A - 3 072 438 (LIVINGSTON)<br>* Claim 1; figures 1,2 * | 1-8 | |
| X | US - A - 3 804 464 (GUST)<br>* Claim 1; figure 5 * | 1-7 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-10-1980 | SCHMITTER |

EPO Form 1503.1  06.78